# EUROPEAN PATENT SPECIFICATION

(11) **EP 2 073 447 B1**
(45) Date of publication and mention of the grant of the patent: **22.08.2012**
(21) Application number: 07291579.6
(22) Date of filing: 20.12.2007
(51) Int. Cl.: H04L 12/28, H04L 12/24

(54) **SYSTEM FOR CONNECTING UNIVERSAL PLUG AND PLAY UPNP DEVICES IN A UPNP NETWORK**
SYSTEM ZUM ANSCHLIEßEN VON UNIVERSAL-PLUG-AND-PLAY(UPNP)-VORRICHTUNGEN AN EIN UPNP-NETZ
SYSTÈME POUR LE RACCORDEMENT DE DISPOSITIFS UPNP (UNIVERSAL PLUG AND PLAY) DANS UN RÉSEAU UPNP

(43) Date of publication of application: 24.06.2009
(73) Proprietor: Alcatel Lucent, 75007 Paris (FR)
(72) Inventor: Justen, Pascal c/o Alcatel-Lucent Bell N.V., 2018 Antwerp (BE); Stevens, Christoph c/o Alcatel-Lucent Bell N.V., 2018 Antwerp (BE); Liekens, Werner c/o Alcatel-Lucent Bell N.V., 2018 Antwerp (BE); Bouchat, Christele c/o Alcatel-Lucent Bell N.V., 2018 Antwerp (BE); Acke, Willem c/o Alcatel-Lucent Bell N.V., 2018 Antwerp (BE); Coppens, Jan, 9000 Gent (BE)
(74) Representative: Sciaux, Edmond

(56) References cited:
- EP-A- 1 394 986
- US-A1- 2004 267 914
- US-A1- 2005 074 018
- BOBEK A ET AL: "Voice-based generic UPnP control point" 20040624; 20040624 - 20040626, 24 June 2004 (2004-06-24), pages 487-492, XP010782693
- DIDIER DONSEZ ED - ALIREZA SEYEDI ET AL: "On-Demand Component Deployment in the UPnP Device Architecture" CONSUMER COMMUNICATIONS AND NETWORKING CONFERENCE, 2007. CCNC 2007. 20 07 4TH IEEE, IEEE, PI, 1 January 2007 (2007-01-01), pages 920-924, XP031087917 ISBN: 978-1-4244-0667-8
- DIDIER DONSEZ ET AL: "A Multi-Protocol Service-Oriented Platform for Home Control Applications" CONSUMER COMMUNICATIONS AND NETWORKING CONFERENCE, 2007. CCNC 2007. 20 07 4TH IEEE, IEEE, PI, 1 January 2007 (2007-01-01), pages 1174-1175, XP031087970 ISBN: 978-1-4244-0667-8
- "TR-069 CPE WAN Management Protocol v1.1 Issue 1 Amentment 2" BROADBAND FORUM,, 1 December 2007 (2007-12-01), pages 1-138, XP002493850

## Description

The invention relates to a system for connecting Universal Plug and Play UPnP devices in a UPnP network and a connection method implementable in such a system.

UPnP is a network protocol notably applying to home networks interconnecting a plurality of devices. It is service-centric, in other words devices are dedicated to offer services to the home network user.

Devices implementing UPnP services are controlled via a UPnP control point. Such a UPnP control point manages the state (newly advertised or leaving, hierarchy) of a service offered by a UPnP device, either according to a user demand (e.g. via a remote control), either autonomously via local management software (e.g. home quality of service management). In this last case, the services provided by such devices need to be organized in a specific order as a service can depend on a previous one. For example, an incoming phone call is presented as a caption on TV, and as the user picks up the phone the TV volume is muted.

Document BOBEK A. ET AL "Voice-based generic UPnP Control Point" (20040624; 20040624 - 20040626, 24 June 2004, pages 487-492, XP010782693) describes a concept for a generic voice UPnP control point (client) which can be used to operate services on remote devices.

Document DIDIER DONZEC ED - ALIREZA SEYEDI ET AL "On-Demand Component Deployment in the UPnP Device Architecture" (CONSUMER COMMUNICATIONS AND NETWORKING CONFERENCE, 2007. CCNC 2007. 20 07 4TH IEEE, PI, 1 January 2007, pages 920-924, XP031087917, ISBN: 978-1-4244-0667-8) describes the dynamic trading and deployment of software components implementing UPnP control points.

Document US-2005/074018 describes a UPnP device which makes itself known through a set of processes, as discovery, description, control, eventing and presentation.

Dedicated UPnP control points consist in a software intermixing specific rules and logic in order to manage UPnP services.

UPnP control points remain tightly coupled to the UPnP services they manage. Thus, in a known manner, when a new UPnP service is detected, an additional dedicated UPnP control point must be developed.

Such UPnP control points development consequently causes:
- extra costs, notably in licensing third party software or in-house development of a new UPnP control point;
- extra deployment effort, as for each UPnP control point, at least one software is installed, periodically upgraded and maintained;
- memory use increase on the system hosting the various UPnP control points.

Moreover some applications are very specific or use ad interim (e.g. monitoring, troubleshooting assistance, device pre-configuration), and a user might not be interested in investing in many software.

The purpose of the invention is to resolve the problems of the prior art by proposing, in particular, a system for connecting UPnP devices in a UPnP network using a generic UPnP control point which can be used to control all UPnP devices, for any UPnP service known upfront or not.

For that purpose and according to a first aspect, the invention relates to a system according to claim 1.

According to a second aspect, the invention relates to a connection method according to claim 8.

Other aspects and advantages will become apparent in the following description made with reference to the appended figures that represent the system for connecting UPnP devices according to respectively one embodiment of the invention.

In the present invention UPnP devices 1 are connected in a UPnP network. Instead of one control point for each device, the system comprises a generic UPnP control point 2 for several and preferably all UPnP devices 1 of the network.

The generic UPnP control point 2 only addresses any kind of UPnP devices 1 and services in the network and control logic means of the devices are externalized from the generic UPnP control point 2.

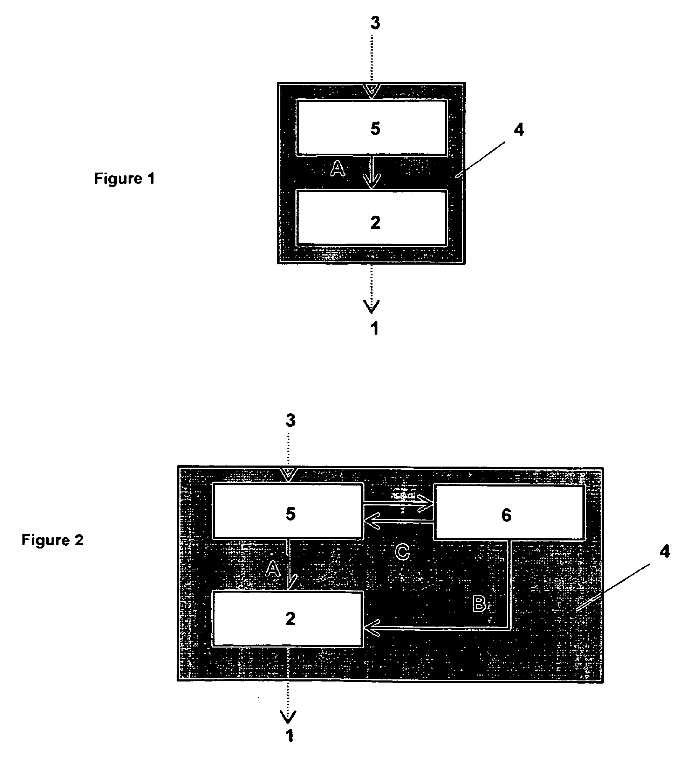

In a first embodiment, according to figure 1, the logic is fully delegated to the remote management server 3.

To do so, control logic means are implemented in the remote management server 3 of the network and the generic UPnP control point 2 is introduced in an Open Services Gateway initiative (OGSi) service platform 4 as an OSGi bundle.

The remote management server 3 submits commands to be executed by the generic UPnP control point 2, which is therefore interactively controlled through a remote management agent 5.

The remote management protocol used by the agent 5 is according to TR-069 standard.

Dedicated TR-069 control signals are translated towards device dedicated UPnP control signals, through an interface A.

The interface A is provided between the remote management agent 5 and the generic UPnP control point 2, said interface comprising means to control the creation of UPnP service control point, and means to report changes of UPnP devices state and of UPnP devices object hierarchy.

Dedicated TR-069 signals using the interface A retrieve the inventory of currently discovered UPnP devices 1 and services in the network. As new devices 1, and consequently new services, can regularly be added or removed from the network their quantity changes the same.

Because there is only one UPnP control point 2 the number of devices 1 and services needs to be referred. Though, TR-069 also receives notifications of state changes of UPnP devices 1 and services in the network. In order to optimize the UPnP devices management the generic UPnP control point 2 has to be kept aware of the newly advertised devices as well as the one removed from the network or changes in the device hierarchy.

Another function of the TR-069 signals is to invoke UPnP actions on UPnP services and ask to receive a notification when a UPnP state variable value changes. Device parameter and configuration audit can periodically be reported towards the remote management server 3, erroneous configuration parameters can be corrected.

Dedicated TR-069 signals allow then remote control of the generic UPnP control point achievement.

In one example, a user having trouble to make a UPnP device 1 work properly inside the home network can access the remote management server 3 and flag his devices 1 as not working, if the fault is not automatically detected,. The server 3 is informed about the problem and instantiates a dedicated UPnP control point via the generic UPnP control point 2.

In a second embodiment of the invention, as shown in figure 2, the control logic means are implemented in the service platform 4 of the network, the generic UPnP control point 2 being driven by rule-based engine 6 on the OSGi service platform 4.

A remote management agent 5 of the remote management server 3 communicates network information to the generic UPnP control point 2, the same way as in the first embodiment. An interface A is provided between the remote management agent 5 and the generic UPnP control point 2, said interface comprising means to control the creation of UPnP service control point, and means to report changes of UPnP devices state and of UPnP devices object hierarchy.

The remote management agent 5 of the remote management server 3 submits UPnP devices managing rules to rule-based engine 6 on the OSGi service platform 4.

Such rules can be submitted for automating diagnostics, querying configuration data and measurement information that are collected.

The UPnP devices managing rules are dumped by the remote management agent 5, either by downloading a rule file at given URL (e.g. TR-069 DownloadReq RPC) or via a dedicated TR-069 object.

The rule-based engine 6 reports then requested data results to the remote management agent 5, which are further transmitted to the remote management server 3.

To assure the transmission of rules and data results, an interface C is provided between the remote management agent 5 and the rule-based engine 6.

On the other hand, generic UPnP control point 2 being driven by rule-based engine 6, an interface B is provided between them, said interface comprising means to formalize the application programming interface used by the rule-based engine 5 to discover UPnP devices 1, means to invoke UPnP actions and means to monitor changes in UPnP state variables.

## Claims

1. System for connecting Universal Plug and Play UPnP devices (1) in a UPnP network, said system comprising a generic UPnP control point (2) for several UPnP devices (1) of the network and, externalized to such UPnP control point, control logic means of the devices (1), said system being **characterized in that** the control logic means are implemented in a remote management server (3) of the network, the generic UPnP control point (2) being interactively controlled through a remote management agent (5).

2. System according to claim 1, **characterized in that** a remote management protocol used by the agent is according to the TR-069 standard.

3. System according to claim 1 or 2, **characterized in that** one interface (A) is provided between the remote management agent (5) and the generic UPnP control point (2), said interface comprising means to control the creation of UPnP service control point, and means to report changes of UPnP devices state and of UPnP devices object hierarchy.

4. System according to any of claims 1 to 3, **characterized in that** the generic UPnP control point (2) is introduced on the Open Services Gateway initiative (OGSi) service platform (4) as an OSGi bundle.

5. System according to claim 1, **characterized in that** the control logic means are implemented in the service platform (4) of the network, the generic UPnP control point (2) being driven by a rule-based engine (3) on the OSGi service platform (4).

6. System according to claim 5, **characterized in that** two interfaces (A,B) are provided:
- a first one between the remote management agent (5) and the generic UPnP control point (2), said interface comprising means to control the creation of UPnP service control point, and means to report changes of UPnP devices state and of UPnP devices object hierarchy; and
- a second one between said control point and a rule-based engine (6), said interface comprising means to formalize the application programming interface used by the rule-based engine (6), means to invoke UPnP actions and means to monitor changes in UPnP state variables.

7. System according to claim 6, **characterized in that** a further interface (C) is provided between the remote management agent (5) and the rule-based engine (6), said interface comprising means to submit UPnP devices managing rules to the rule-based engine and means to report requested data results to the remote management agent (5).

8. Connection method of UPnP devices (1) in a UPnP network, said network comprising a generic UPnP control point (2) for several UPnP devices (1) of the network and a remote management server (3) integrating a remote management agent (5), wherein dedicated TR-069 control signals of the remote management agent (5) are translated by control logic means implemented in the remote management server (3) towards device dedicated UPnP control signals, and remote control of a generic UPnP control point (2) is achieved by said dedicated signals in order to interactively control said generic UPnP control point through the remote management agent (5).

9. Connection method according to claim 8, wherein dedicated TR-069 signals:
- retrieve the inventory of currently discovered UPnP devices (1) and services in the network;
- receive notifications of state changes of UPnP devices (9) and services in the network;
- invoke UPnP actions on UPnP services and ask to receive a notification when a UPnP state variable value changes.

10. Connection method according to claim 8 or 9, wherein the remote management agent (5) submits UPnP devices managing rules to a rule-based engine (6) on a OSGi service platform (4), said engine reporting requested data results to the remote management agent (5).

11. Connection method according to claim 10. wherein the UPnP devices managing rules are dumped by the remote management agent (5), either by downloading a rule file at a given URL or via a dedicated TR-069 object.

## Patentansprüche

1. System zum Anschließen von Universal Plug and Play bzw. UPnP-Geräten (1) in einem UPnP-Netzwerk, wobei das besagte System einen generischen UPnP-Kontrollpunkt (2) für mehrere UPnP-Geräte (1) des Netzwerks und an den besagten UPnP-Kontrollpunkt externalisierte Steuerlogikmittel für die Geräte (1) umfasst, wobei das besagte System **dadurch gekennzeichnet ist, dass** die Steuerlogikmittel in einem Fernverwaltungsserver (3) des Netzwerks implementiert werden, wobei der generische UPnP-Kontrollpunkt (2) über einen Fernverwaltungsagenten (5) interaktiv gesteuert werden.

2. System nach Anspruch 1, **dadurch gekennzeichnet, dass** ein von dem Agenten verwendetes Fernverwaltungsprotokoll dem TR-069-Standard entspricht.

3. System nach Anspruch 1 oder 2, **dadurch gekennzeichnet, dass** eine Schnittstelle (A) zwischen dem Fernverwaltungsagenten (5) und dem generischen UPnP-Kontrollpunkt (2) bereitgestellt wird, wobei die besagte Schnittstelle Mittel zum Steuern der Erzeugung des UPnP-Dienstkontrollpunkts und Mittel zum Melden von Änderungen des Zustands der UPnP-Geräte und der UPnP-Geräte-Objekthierarchie umfasst.

4. System nach einem beliebigen der Ansprüche 1 bis 3, **dadurch gekennzeichnet, dass** der generische UPnP-Kontrollpunkt (2) auf einer Open Services Gateway-Initiative bzw. OSGi-Dienstplattform (4) als ein OSGi-Bundle eingespielt wird.

5. System nach Anspruch 4, **dadurch gekennzeichnet, dass** die Steuerlogikmittel in der Dienstplattform (4) des Netzwerks implementiert werden, wobei der generische UPnP-Kontrollpunkt (2) von einem regelbasierten Automaten (3) auf der OSGi-Dienstplattform (4) angetrieben wird.

6. System nach Anspruch 5, **dadurch gekennzeichnet, dass** zwei Schnittstellen (A, B) bereitgestellt werden:
- Eine erste Schnittstelle zwischen dem Fernverwaltungsagenten (5) und dem generischen UPnP-Kontrollpunkt (2), wobei die besagte Schnittstelle Mittel zum Steuern der Erzeugung des UPnP-Dienstkontrollpunkts und Mittel zum Melden von Änderungen des Zustands der UPnP-Geräte und der UPnP-Geräte-Objekthierarchie umfasst; und
- eine zweite Schnittstelle zwischen dem besagten Kontrollpunkt und einem regelbasierten Automaten (6), wobei die besagte Schnittstelle Mittel zum Formalisieren der von dem regelbasierten Automaten (6) benutzten Anwendungsprogrammierschnittstelle, Mittel zum Aufrufen von UPnP-Aktionen und Mittel zum Überwachen der Änderungen von UPnP-Zustandsvariablen umfasst.

7. System nach Anspruch 6, **dadurch gekennzeichnet, dass** eine weitere Schnittstelle (C) zwischen dem Fernverwaltungsagenten (5) und dem regelbasierten Automaten (6) bereitgestellt wird, wobei die besagte Schnittstelle Mittel zum Senden von Verwaltungsregeln für die UPnP-Geräte an den regelbasierte Automaten und Mittel zum Melden der angeforderten Datenergebnisse an den Fernverwaltungsagenten (5) umfasst.

8. Verfahren zum Anschließen von UPnP-Geräten (1) in einem UPnP-Netzwerk, wobei das besagte Netzwerk einen generischen UPnP-Kontrollpunkt (2) für mehrere UPnP-Geräte (1) des Netzwerks und einen Fernverwaltungsserver (3), welcher einen Fernverwaltungsagenten (5) integriert, umfasst, wobei zugeordnete TR-069-Steuersignale des Fernverwaltungsagenten (5) von in dem Fernverwaltungsserver (3) implementierten Steuerlogikmitteln in dem Gerät zugeordnete UPnP-Steuersignale übersetzt werden und eine Fernsteuerung eines generischen UPnP-Kontrollpunktes (2) durch die besagten zugeordneten Signale ausgeführt wird, um den besagten generischen UPnP-Kontrollpunkt über den Fernverwaltungsagenten (5) interaktiv zu steuern.

9. Verfahren zum Anschließen nach Anspruch 8, wobei zugeordnete TR-069-Signale:
- Die Liste der gegenwärtig erkannten UPnP-Geräte (1) und Dienste im Netzwerk abrufen;
- Benachrichtigungen über die Änderungen des Zustands der UPnP-Geräte (1) und Dienste im Netzwerk empfangen;
- UPnP-Aktionen auf UPnP-Diensten aufrufen und den Empfang einer Benachrichtigung, wenn sich der Wert der UPnP-Zustandsvariablen ändert, anfordern.

10. Verfahren zum Anschließen nach Anspruch 8 oder 9, wobei der Fernverwaltungsagent (5) UPnP-Geräte-Verwaltungsregeln an einen regelbasierte Automaten (6) auf einer OSGi-Dienstplattform (4) sendet, wobei der besagte Automat die angeforderten Datenergebnisse an die Fernverwaltungsagenten (5) meldet.

11. Verfahren zum Anschließen nach Anspruch 10, wobei die UPnP-Geräte-Verwaltungsregeln von dem Fernverwaltungsagenten (5) entweder durch Herunterladen einer Regeldatei an einem gegebenen URL oder über ein zugeordnetes TR-069-Objekt gedumpt werden.

## Revendications

1. Système pour connecter des dispositifs UPnP (1) dans un réseau UPnP, ledit système comprenant un point de commande UPnP générique (2) pour plusieurs dispositifs UPnP (1) du réseau et, externalisés vers un tel point de commande UPnP générique, des moyens logiques de commande des dispositifs (1), ledit système étant **caractérisé en ce que** les moyens logiques de commande sont mis en oeuvre dans un serveur de gestion distant (3) du réseau, le point de commande UPnP générique (2) étant commandé de manière interactive par un agent de gestion distant (5).

2. Système selon la revendication 1, **caractérisé en ce qu'**un protocole de gestion distant utilisé par l'agent est conforme à la norme TR-069.

3. Système selon la revendication 1 ou 2, **caractérisé en ce qu'**une interface (A) est prévue entre l'agent de gestion distant (5) et le point de commande UPnP générique (2), ladite interface comprenant des moyens pour commander la création de point de commande de services UPnP, et des moyens pour signaler des changements d'état de dispositifs UPnP et de hiérarchie d'objets de dispositifs UPnP.

4. Système selon l'une quelconque des revendications 1 à 3, **caractérisé en ce que** le point de commande UPnP générique (2) est introduit dans la plate-forme de services (4) d'initiative de passerelle de services ouverts (OSGi) comme un faisceau OSGi.

5. Système selon la revendication 4, **caractérisé en ce que** les moyens logiques de commande sont mis en oeuvre dans la plate-forme de services (4) du réseau, le point de commande UPnP générique (2) étant entraîné par un moteur basé sur des règles (3) dans la plate-forme de services OSGi (4).

6. Système selon la revendication 5, **caractérisé en ce que** deux interfaces (A, B) sont prévues :
- une première interface entre l'agent de gestion distant (5) et le point de commande UPnP générique (2), ladite interface comprenant des moyens pour commander la création de point de commande de services UPnP, et des moyens pour signaler des changements d'état de dispositifs UPnP et de hiérarchie d'objets de dispositifs UPnP ; et
- une deuxième interface entre ledit point de commande et un moteur basé sur des règles (6), ladite interface comprenant des moyens pour mettre en forme l'interface de programmation d'application utilisée par le moteur basé sur des règles (6), des moyens pour mettre en oeuvre des actions UPnP et des moyens pour surveiller des changements des variables d'état UPnP.

7. Système selon la revendication 6, **caractérisé en ce qu'**une autre interface (C) est prévue entre l'agent de gestion distant (5) et le moteur basé sur des règles (6), ladite interface comprenant des moyens pour soumettre des règles de gestion des dispositifs UPnP au moteur basé sur des règles et des moyens pour signaler des résultats de données demandés à l'agent de gestion distant (5).

8. Procédé de connexion de dispositifs UPnP (1) dans un réseau UPnP, ledit réseau comprenant un point de commande UPnP générique (2) pour plusieurs dispositifs UPnP (1) du réseau et un serveur de gestion distant (3) intégrant un agent de gestion distant (5), dans lequel des signaux de commande TR-069 dédiés de l'agent de gestion distant (5) sont traduits par des moyens logiques de commande mis en oeuvre dans le serveur de gestion distant (3) en signaux de commande UPnP dédiés de dispositif, et une commande distante d'un point de commande UPnP générique (2) est obtenue par lesdits signaux dédiés afin de commander de manière interactive ledit point de commande UPnP générique au moyen de l'agent de gestion distant (5).

9. Procédé de connexion selon la revendication 8, dans lequel des signaux TR-069 dédiés :
- récupèrent l'inventaire de dispositifs (1) et de services UPnP actuellement découverts dans le réseau ;
- reçoivent des notifications de changements d'état de dispositifs (1) et de services UPnP dans le réseau ;
- mettent en oeuvre des actions UPnP sur des services UPnP et demandent à recevoir une notification lorsqu'une valeur de variable d'état UPnP change.

10. Procédé de connexion selon la revendication 8 ou 9, dans lequel l'agent de gestion distant (5) soumet des règles de gestion des dispositifs UPnP à un moteur basé sur des règles (6) dans une plate-forme de services OSGi (4), ledit moteur signalant des résultats de données demandés à l'agent de gestion distant (5).

11. Procédé de connexion selon la revendication 10, dans lequel les règles de gestion des dispositifs UPnP sont éliminées par l'agent de gestion distant (5), en téléchargeant un fichier de règles dans une adresse URL donnée ou par l'intermédiaire d'un objet TR-069 dédié.
